# EUROPÄISCHE PATENTSCHRIFT

(11) **EP 3 139 145 B1**
(45) Veröffentlichungstag und Bekanntmachung des Hinweises auf die Patenterteilung: **17.10.2018**
(21) Anmeldenummer: 16183645.7
(22) Anmeldetag: 10.08.2016
(51) Int. Cl.: G01L 5/16, G01L 11/02

(54) **DRUCKMESSVORRICHTUNG UND HYDRAULIKANORDNUNG**
PRESSURE MEASUREMENT DEVICE AND HYDRAULIC ASSEMBLY
DISPOSITIF DE MESURE DE PRESSION ET SYSTEME HYDRAULIQUE

(30) Priorität: 01.09.2015 DE 102015216713; 30.11.2015 DE 102015223782
(43) Veröffentlichungstag der Anmeldung: 08.03.2017
(73) Patentinhaber: Continental Teves AG & Co. OHG, 60488 Frankfurt am Main (DE)
(72) Erfinder: Habig, Jens, 61476 Kronberg (DE); Jöckel, Wolfgang, 36129 Gersfeld (DE); Schulmeister, Michael, 64846 Groß-Zimmern (DE)

(56) Entgegenhaltungen:
- WO-A1-2004/020796
- DE-A1-102013 210 349
- US-A- 5 242 722

## Beschreibung

Die Erfindung betrifft eine Druckmessvorrichtung sowie eine Hydraulikanordnung mit einer solchen Druckmessvorrichtung.

Derzeit werden Drucksensoren für Bremssysteme in einer hydraulischen Steuerungseinheit (HCU) verbaut, um hydraulischen Druck in Bremskreisen oder ähnlichen hydraulischen Vorrichtungen zu messen. Diese verfügen typischerweise über eine elektrische Kontaktierung, welche zur Signalübertragung verwendet wird. Die Signale der Drucksensoren werden in einer elektronischen Steuerungseinheit (ECU) aufgenommen und in den Bremsfunktionen verarbeitet.

Die Kontaktierung zwischen HCU und ECU erfolgt derzeit typischerweise über Federkontakte, die bei der Zusammenführung von HCU und ECU auf Kontaktflächen gepresst werden.

Bei dieser Vorgehensweise ergeben sich Probleme bezüglich der Störfestigkeit, insbesondere bezüglich einer elektromagnetischen Störung der Sensorsignale durch die galvanische Kopplung der Signalpotentiale zwischen HCU und ECU. Außerdem erfordern die Anforderungen an die Zuverlässigkeit der elektrischen Kontakte über eine typische Produktlaufzeit einen hohen Aufwand bezüglich der Materialrobustheit, was erhebliche Kosten verursachen kann.

Weitere Stand der Technik ist aus DE102013210349 und US5242722 bekannt. Es ist deshalb eine Aufgabe der Erfindung, eine Druckmessvorrichtung bereitzustellen, welche im Vergleich zu Ausführungen gemäß dem Stand der Technik alternativ, insbesondere besser, ausgeführt ist. Es ist des Weiteren eine Aufgabe der Erfindung, eine Hydraulikanordnung mit einer solchen Druckmessvorrichtung oder zur Verwendung mit einer solchen Druckmessvorrichtung vorzusehen.

Dies wird erfindungsgemäß durch eine Druckmessvorrichtung nach Anspruch 1 sowie eine Hydraulikanordnung nach Anspruch 14 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft eine Druckmessvorrichtung, welche einen Messkörper aufweist, welcher zumindest teilweise deformierbar ist. Er kann auch vollständig deformierbar sein. Sie weist ferner eine Anzahl von Sensoren auf. In dem Messkörper ist eine Kavität zur Aufnahme einer Hülse ausgebildet und der Messkörper ist dazu ausgebildet, sich bei Ausübung einer Kraft in der Kavität auf den Messkörper zu deformieren. Die Sensoren sind dazu ausgebildet, die Deformation des Messkörpers zu messen.

Die erfindungsgemäße Druckmessvorrichtung bringt mehrere Vorteile mit sich. Zum einen erfolgt eine galvanische Trennung der Sensorsignale von einer HCU-Baugruppe. Sie ermöglicht einen einfachen, mechanischen, robusten Zusammenbau von ECU und HCU. Die Kosten werden insbesondere bei den Sensoren und Kontakten reduziert. Die Sensorik ist hochskalierbar. Außerdem ist die erfindungsgemäße Druckmessvorrichtung robust gegen Verschmutzung und es erfolgt des Weiteren eine mechanische Temperaturkompensation.

Der Messkörper kann insbesondere transparent sein. Er ist vorteilhaft zumindest teilweise oder auch ganz mit einer reflektierenden Schicht überzogen. Damit können insbesondere Lichtstrahlen durch den Messkörper dringen und an seiner Oberfläche reflektiert werden, was vorteilhaft die Verwendung optischer Sensoren ermöglicht.

Die Sensoren können gemäß einer vorteilhaften Ausführung als optische Sensoren ausgebildet sein. Sie können insbesondere dazu ausgebildet sein, zumindest einen Lichtstrahl in den Messköper abzustrahlen und nach Reflexion an der reflektierenden Schicht ortsaufgelöst zu detektieren. Dies hat sich für typische Anwendungen als vorteilhaft erwiesen.

Die Sensoren können jedoch beispielsweise auch als induktive oder dehnungsmessende Sensoren ausgebildet sein. Sie können beispielsweise als Dehnungsmesselemente ausgebildet sein. Insbesondere in diesem Fall kann der Messkörper als starrer Körper ausgebildet sein. Er kann die Kraft damit auf die Sensoren übertragen. Beispielsweise kann er relativ zu einem Grundkörper beweglich sein.

Dehnungsempfindliche Strukturen können beispielsweise wie DMS (Dehnungsmessstreifen) auf piezoresistiver Basis, auf Dünnschicht- oder Dickschichtbasis basieren. Auch induktive Strukturen können integriert werden.

Die Sensoren können beispielsweise als Dehnungsmessstreifen, beispielsweise metallisch, dick- oder dünnschichtig und/oder piezoresistiv ausgebildet sein. Die Sensoren können beispielsweise auch als optische Messanordnungen ausgebildet sein.

Die Druckmessvorrichtung weist bevorzugt eine Mehrzahl von Sensoren, insbesondere drei Sensoren, auf. Die Sensoren können als Drucksensoren ausgebildet sein.

Die Kavität ist gemäß jeweiliger Ausführungen beispielsweise zylinderförmig, konisch oder quaderförmig.

Der Messkörper ist bevorzugt dazu ausgebildet, sich bei in der Kavität auf den Messkörper ausgeübten Kräften entlang einer Längsrichtung und/oder quer dazu zu deformieren. Hierbei sind jedoch auch andere Ausführungen denkbar, beispielsweise kann er auch lediglich zur Übertragung einer Kraft entlang der Längsrichtung ausgebildet sein.

Der Messkörper ist bevorzugt halbkugelförmig ausgebildet. Dies hat sich für typische Anwendungen bewährt.

Gemäß einer bevorzugten Ausführung weist die Druckmessvorrichtung ferner einen Grundkörper auf. Dieser kann vorzugsweise als elektronische Steuerungseinrichtung bzw. Steuerungseinheit (ECU) ausgebildet sein. Dieser Grundkörper kann beispielsweise fest mit der HCU verbunden sein und eine Referenz darstellen.

Die Druckmessvorrichtung weist erfindungsgemäß ferner eine Hülse auf, wobei die Hülse deformierbar ist, und wobei die Hülse in der Kavität angeordnet ist, so dass sie bei Deformation eine Kraft auf den Messkörper ausübt. Eine solche Hülse kann in bevorzugter Weise als Schnittstelle zum hydraulischen System dienen.

Die Hülse kann beispielsweise als Dreh- oder Tiefziehteil ausgebildet sein. Sie kann insbesondere aus Stahl gefertigt sein.

Die Hülse weist dabei insbesondere einen Hohlraum auf, welcher mit einem zu messenden Reservoir fluidisch verbunden ist. Die Hülse wird dabei bei Druckänderung in dem Reservoir deformiert. Dies ermöglicht eine unmittelbare Übertragung einer Druckänderung eines Fluids, also beispielsweise einer Flüssigkeit oder eines Gases in dem Reservoir auf den Messkörper und somit auf die Drucksensoren.

Die Hülse kann insbesondere zylinderförmig, konisch oder quaderförmig ausgebildet sein. Insbesondere kann sie komplementär zur Kavität ausgebildet sein, so dass eine möglichst gute Druckübertragung möglich ist.

Die Hülse kann dazu ausgebildet sein, sich entlang einer Längsrichtung und quer dazu zu deformieren. Sie kann auch beispielsweise dazu ausgebildet sein, sich nur entlang der Längsrichtung oder nur quer dazu zu deformieren.

Derartige Hülsen sind in typischen HCUs bereits vorhanden. Die Erfinder haben herausgefunden, dass sich derartige Hülsen im normalen Betrieb verformen und mittels einer erfindungsgemäßen Druckmessvorrichtung zum Messen eines Drucks verwendet werden können.

Das Reservoir kann insbesondere von einem Material berandet sein, welches Teil einer hydraulischen Steuerungseinheit (HCU) ist.

Die Erfindung betrifft des Weiteren eine Hydraulikanordnung mit einem Reservoir, welches mit einem Fluid gefüllt oder befüllbar ist, mit einer Hülse mit einem Innenraum, und mit einer erfindungsgemäßen Druckmessvorrichtung, wobei der Innenraum mit dem Reservoir fluidisch verbunden ist und die Hülse bei Druckänderung in dem Reservoir deformiert wird. Die Hülse der Hydraulikanordnung ist dabei identisch zur Hülse der Druckmessvorrichtung.

Eine solche Hydraulikanordnung ermöglicht eine vorteilhafte Druckbestimmung mit einer erfindungsgemäßen Druckmessvorrichtung. Die Hülse steht dabei bevorzugt über eine Wand des Reservoirs hervor, so dass eine Druckmessvorrichtung damit zusammenwirken kann.

Anders ausgedrückt weist die Hydraulikanordnung nur eine Hülse auf, und diese ist auch gleichzeitig die Hülse der Druckmessvorrichtung. Es sei verstanden, dass sich dies insbesondere auf einen betrachteten Abschnitt der Hydraulikanordnung bezieht, dass also die Hydraulikanordnung auch weitere Hülsen haben kann, welche jedoch nicht mit der Druckmessvorrichtung in Verbindung stehen.

Hinsichtlich der Druckmessvorrichtung kann auf alle beschriebenen Ausführungen und Varianten zurückgegriffen werden. Erläuterte Vorteile gelten entsprechend.

Die Hülse kann insbesondere Teil eines Ventils der Hydraulikanordnung sein.

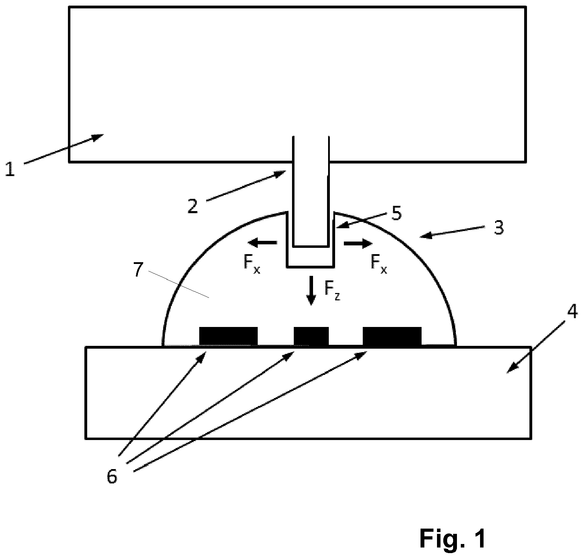

Weitere Merkmale und Vorteile wird der Fachmann dem nachfolgend mit Bezug auf die beigefügte Zeichnung beschriebenen Ausführungsbeispiel entnehmen. Dabei zeigt Fig. 1 eine Hydraulikanordnung mit einer Druckmessvorrichtung.

Fig. 1 zeigt eine Hydraulikanordnung mit einer hydraulischen Steuerungseinheit (HCU) 1 und einer erfindungsgemäßen Druckmessvorrichtung 3. In der HCU 1 ist eine Hülse 2 vorhanden, welche mit einem Reservoir in Verbindung steht. Diese Hülse 2 kann beispielsweise anstatt eines gemäß dem Stand der Technik vorgesehenen Drucksensors verpresst sein. Eine innere Bohrung der Hülse ist mit dem zu messenden Druckbereich verbunden. Die Hülse 2 ist druckdicht ausgebildet und verformt sich geringfügig in axiale (Längenänderung) sowie radiale (Dickenänderung) Richtung.

Die Druckmessvorrichtung 3 weist einen Grundkörper 4 und einen Messkörper 7 auf. Der Grundkörper 4 ist dabei in nicht gezeigter Weise starr mit der HCU 1 verbunden. Er ist als elektronische Steuerungseinheit (ECU) ausgebildet. Der Messkörper 7 ist aus optisch transparentem, deformierbarem Silikon ausgebildet und außenseitig mit einer reflektierenden Schicht überzogen. Somit können sich im Messkörper 7 Lichtstrahlen ausbreiten und an der Schicht reflektiert werden.

In dem Messkörper 7 ist eine Kavität 5 ausgebildet. Diese ist derart ausgebildet, dass sie ein herausragendes Hülsenteil der Hülse 2 aufnehmen kann. Anders ausgedrückt ist sie komplementär zur Hülse 2 ausgebildet.

Das Material, aus welchem der Messkörper 7 ausgebildet ist, kann sich deformieren, insbesondere wenn in der Kavität 5 eine Kraft auf den Messkörper ausgeübt wird.

Die Druckmessvorrichtung 3 weist Sensoren 6 auf. Diese sind vorliegend dazu ausgebildet, einen Lichtstrahl in den Messkörper 7 abzugeben und nach Reflexion an der reflektierenden Schicht ortsaufgelöst zu messen. Auf diese Weise kann eine Deformation des Messkörpers 7 gemessen werden, da eine solche Deformation mit einer Änderung der Lichtausbreitung und insbesondere mit einer Änderung von Winkeln, unter welchen Lichtstrahlen auf die reflektierende Schicht treffen und von dort reflektiert werden, einhergeht.

Im zusammengefügten Zustand von Hülse 2 und Kavität 5 werden über eine vom Druck in der HCU 1 erzeugte geometrische Verformung der Hülse 2 Kräfte auf die Wände der Kavität 5 ausgeübt. Die Kräfte in der Druckmessvorrichtung 3 können sich in radialer Richtung, zum Beispiel als Fx bzw. Fy sowie in axialer Richtung als Kraft Fz ausbreiten. Sie deformieren insbesondere den Messkörper 7.

Die auftretenden Kräfte bzw. Deformationen des Messkörpers 7 werden von den Sensoren 6 aufgenommen und werden als direktes Drucksignal interpretiert. Dies erlaubt einen unmittelbaren Rückschluss auf den in der HCU 1 herrschenden Druck des Fluids. Bei einem Fluid kann es sich typischerweise um eine Flüssigkeit oder um ein Gas handeln.

Es sei darauf hingewiesen, dass die jeweilige Gestalt des Messkörpers sowie der Kavität und auch weiterer Komponenten unterschiedliche Ausführungsformen haben können. Die Kavität kann beispielsweise konisch, zylindrisch oder rechteckig sein.

Die Druckmessvorrichtung 3 kann beispielsweise symmetrisch oder auch unsymmetrisch sein. Der Messkörper 7 ist vorliegend halbkugelförmig ausgeführt, jedoch sei erwähnt, dass auch andere Formen verwendet werden können.

Die beschriebene Druckmessvorrichtung kann beispielsweise zur Kraftmessung an Pedalen wie beispielsweise einem Bremspedal, zur Druckmessung von hydraulischen Systemen oder zur Messung der Anpresskraft bei elektromechanischen Bremsen verwendet werden. Insbesondere kann sie deshalb im Bereich der Bremsen eines Automobils eingesetzt werden.

## Patentansprüche

1. Druckmessvorrichtung (3), aufweisend
- einen Messkörper (7), welcher zumindest teilweise deformierbar ist,
- eine Anzahl von Sensoren (6), **gekennzeichnet durch**
- eine deformierbare Hülse (2),
- wobei in dem Messkörper (7) eine Kavität (5) zur Aufnahme der Hülse (2) ausgebildet ist und der Messkörper (7) dazu ausgebildet ist, sich bei Ausübung einer Kraft in der Kavität (5) auf den Messkörper (7) zu deformieren,
- wobei die Hülse (2) in der Kavität (5) angeordnet ist, so dass sie bei Deformation eine Kraft auf den Messkörper (7) ausübt, und
- wobei die Sensoren (6) dazu ausgebildet sind, die Deformation des Messkörpers (7) zu messen.

2. Druckmessvorrichtung (3) nach Anspruch 1,
- wobei der Messkörper (7) transparent ist und zumindest teilweise mit einer reflektierenden Schicht überzogen ist.

3. Druckmessvorrichtung (3) nach einem der vorhergehenden Ansprüche,
- wobei die Sensoren (6) als optische Sensoren ausgebildet sind.

4. Druckmessvorrichtung nach den Ansprüche 2 und 3,
- wobei die Sensoren (6) dazu ausgebildet sind, zumindest einen Lichtstrahl in den Messkörper (7) abzustrahlen und nach Reflexion an der reflektierenden Schicht ortsaufgelöst zu detektieren.

5. Druckmessvorrichtung (3) nach einem der vorhergehenden Ansprüche,
- wobei die Kavität (5) zylinderförmig, konisch oder quaderförmig ausgebildet ist.

6. Druckmessvorrichtung (3) nach einem der vorhergehenden Ansprüche,
- wobei der Messkörper (7) dazu ausgebildet ist, sich bei in der Kavität (5) auf den Messkörper (7) ausgeübten Kräften entlang einer Längsrichtung und quer dazu zu deformieren.

7. Druckmessvorrichtung (3) nach einem der vorhergehenden Ansprüche,
- wobei der Messkörper (7) halbkugelförmig ausgebildet ist.

8. Druckmessvorrichtung (3) nach einem der vorhergehenden Ansprüche,
- welche ferner einen Grundkörper (4) aufweist, welcher vorzugsweise als elektronische Steuerungseinheit (ECU) ausgebildet ist.

9. Druckmessvorrichtung (3) nach einem der vorhergehenden Ansprüche,
- wobei die Hülse (2) einen Hohlraum aufweist, welcher mit einem zu messenden Reservoir fluidisch verbunden ist,
- wobei die Hülse (2) bei Druckänderung in dem Reservoir deformiert wird.

10. Druckmessvorrichtung (3) nach einem der vorhergehenden Ansprüche,
- wobei die Hülse (2) zylinderförmig, konisch oder quaderförmig ausgebildet ist.

11. Druckmessvorrichtung (3) nach einem der vorhergehenden Ansprüche,
- wobei die Hülse (2) dazu ausgebildet ist, sich entlang einer Längsrichtung und quer dazu zu deformieren.

12. Druckmessvorrichtung (3) nach einem der vorhergehenden Ansprüche,
- wobei das Reservoir Teil einer hydraulischen Steuerungseinheit (HCU) ist.

13. Hydraulikanordnung, aufweisend
- ein Reservoir, welches mit einem Fluid gefüllt oder befüllbar ist,
- eine Hülse (2) mit einem Innenraum, und
- eine Druckmessvorrichtung (3) nach einem der vorhergehenden Ansprüche,
- wobei der Innenraum mit dem Reservoir fluidisch verbunden ist und die Hülse (2) bei Druckänderung in dem Reservoir deformiert wird, und
- wobei die Hülse (2) der Hydraulikanordnung identisch ist zur Hülse (2) der Druckmessvorrichtung (3).

14. Hydraulikanordnung nach Anspruch 13,
- wobei die Hülse (2) Teil eines Ventils der Hydraulikanordnung ist.

## Claims

1. Pressure measurement device (3), having
- a measuring body (7) which is at least partly deformable,
- a number of sensors (6),
**characterized by**
- a deformable sleeve (2),
- wherein a cavity (5) is formed in the measuring body (7) to receive the sleeve (2), and the measuring body (7) is designed to be deformed when a force in the cavity (5) is exerted on the measuring body (7),
- wherein the sleeve (2) is arranged in the cavity (5), so that, during deformation, it exerts a force on the measuring body (7), and
- wherein the sensors (6) are designed to measure the deformation of the measuring body (7).

2. Pressure measurement device (3) according to Claim 1,
- wherein the measuring body (7) is transparent and is at least partly covered with a reflective layer.

3. Pressure measurement device (3) according to one of the preceding claims,
- wherein the sensors (6) are formed as optical sensors.

4. Pressure measurement device according to Claims 2 and 3,
- wherein the sensors (6) are designed to emit at least one light beam into the measuring body (7) and, following reflection at the reflective layer, to detect the same in a locally-resolved manner.

5. Pressure measurement device (3) according to one of the preceding claims,
- wherein the cavity (5) is cylindrical, conical or cuboidal.

6. Pressure measurement device (3) according to one of the preceding claims,
- wherein the measuring body (7) is designed to be deformed along a longitudinal direction and transversely thereto when forces in the cavity (5) are exerted on the measuring body (7).

7. Pressure measurement device (3) according to one of the preceding claims,
- wherein the measuring body (7) is hemispherical.

8. Pressure measurement device (3) according to one of the preceding claims,
- which also has a base (4), which is preferably formed as an electronic control unit (ECU).

9. Pressure measurement device (3) according to one of the preceding claims,
- wherein the sleeve (2) has a hollow space which is fluidically connected to a reservoir to be measured,
- wherein the sleeve (2) is deformed when there is a pressure change in the reservoir.

10. Pressure measurement device (3) according to one of the preceding claims,
- wherein the sleeve (2) is cylindrical, conical or cuboidal.

11. Pressure measurement device (3) according to one of the preceding claims,
- wherein the sleeve (2) is designed to be deformed along a longitudinal direction and transversely thereto.

12. Pressure measurement device (3) according to one of the preceding claims,
- wherein the reservoir is part of a hydraulic control unit (HCU).

13. Hydraulic assembly, having
- a reservoir, which is or can be filled with a fluid,
- a sleeve (2) having an internal space, and
- a pressure measurement device (3) according to one of the preceding claims,
- wherein the internal space is fluidically connected to the reservoir, and the sleeve (2) is deformed when there is a pressure change in the reservoir, and
- wherein the sleeve (2) of the hydraulic assembly is identical to the sleeve (2) of the pressure measurement device (3).

14. Hydraulic assembly according to Claim 13,
- wherein the sleeve (2) is part of a valve of the hydraulic assembly.

## Revendications

1. Dispositif de mesure de pression (3), présentant
- un corps de mesure (7), qui est au moins partiellement déformable,
- un nombre de capteurs (6),
**caractérisé par**
- une douille déformable (2),
- dans lequel une cavité (5) est formée dans le corps de mesure (7) pour recevoir la douille (2) et le corps de mesure (7) est configuré pour se déformer lors de l'exercice d'une force dans la cavité (5) sur le corps de mesure (7),
- dans lequel la douille (2) est disposée dans la cavité (5), de telle manière qu'elle exerce en cas de déformation une force sur le corps de mesure (7), et
- dans lequel les capteurs (6) sont configurés pour mesurer la déformation du corps de mesure (7).

2. Dispositif de mesure de pression (3) selon la revendication 1,
- dans lequel le corps de mesure (7) est transparent et est au moins en partie revêtu d'une couche réfléchissante.

3. Dispositif de mesure de pression (3) selon l'une quelconque des revendications précédentes,
- dans lequel les capteurs (6) sont formés par des capteurs optiques.

4. Dispositif de mesure de pression selon les revendications 2 et 3,
- dans lequel les capteurs (6) sont configurés pour émettre au moins un rayon lumineux dans le corps de mesure (7) et pour le détecter en résolution locale après réflexion sur la couche réfléchissante.

5. Dispositif de mesure de pression (3) selon l'une quelconque des revendications précédentes,
- dans lequel la cavité (5) est de forme cylindrique, conique ou parallélépipédique.

6. Dispositif de mesure de pression (3) selon l'une quelconque des revendications précédentes,
- dans lequel le corps de mesure (7) est configuré pour se déformer le long d'une direction longitudinale et transversalement à celle-ci dans le cas de forces exercées sur le corps de mesure (7) dans la cavité (5).

7. Dispositif de mesure de pression (3) selon l'une quelconque des revendications précédentes,
- dans lequel le corps de mesure (7) est de forme hémisphérique.

8. Dispositif de mesure de pression (3) selon l'une quelconque des revendications précédentes,
- qui présente en outre un corps de base (4), qui est réalisé de préférence sous la forme d'une unité de commande électronique (ECU).

9. Dispositif de mesure de pression (3) selon l'une quelconque des revendications précédentes,
- dans lequel la douille (2) présente un espace creux, qui est en communication fluidique avec le réservoir à mesurer,
- dans lequel la douille (2) est déformée en cas de variation de pression dans le réservoir.

10. Dispositif de mesure de pression (3) selon l'une quelconque des revendications précédentes,
- dans lequel la douille (2) est de forme cylindrique, conique ou parallélépipédique.

11. Dispositif de mesure de pression (3) selon l'une quelconque des revendications précédentes,
- dans lequel la douille (2) est configurée pour se déformer le long d'une direction longitudinale ou transversalement à celle-ci.

12. Dispositif de mesure de pression (3) selon l'une quelconque des revendications précédentes,
- dans lequel le réservoir fait partie d'une unité de commande hydraulique (HCU).

13. Système hydraulique, présentant
- un réservoir, qui est ou peut être rempli d'un fluide,
- une douille (2) avec un espace intérieur, et
- un dispositif de mesure de pression (3) selon l'une quelconque des revendications précédentes,
- dans lequel l'espace intérieur est en communication fluidique avec le réservoir et la douille (2) se déforme en cas de variation de pression dans le réservoir, et
- dans lequel la douille (2) du système hydraulique est identique à la douille (2) du dispositif de mesure de pression (3).

14. Système hydraulique selon la revendication 13,
- dans lequel la douille (2) fait partie d'une soupape du système hydraulique.
